# EUROPÄISCHE PATENTSCHRIFT

(11) **EP 3 402 048 B1**
(45) Veröffentlichungstag und Bekanntmachung des Hinweises auf die Patenterteilung: **07.10.2020**
(21) Anmeldenummer: 18163253.0
(22) Anmeldetag: 22.03.2018
(51) Int. Cl.: H02K 3/18, H02K 3/24, H02K 9/02, H02K 9/08, H02K 9/10

(54) **ELEKTRISCHE MASCHINE SOWIE VERFAHREN ZUM HERSTELLEN EINER ELEKTRISCHEN MASCHINE**
ELECTRICAL MACHINE AND METHOD FOR MANUFACTURING SUCH AN ELECTRICAL MACHINE
MACHINE ÉLECTRIQUE AINSI QUE PROCÉDÉ DE FABRICATION D'UNE MACHINE ÉLECTRIQUE

(30) Priorität: 08.05.2017 DE 102017207659
(43) Veröffentlichungstag der Anmeldung: 14.11.2018
(73) Patentinhaber: AUDI AG, 85045 Ingolstadt (DE)
(72) Erfinder: Juris, Peter, 85057 Ingolstadt (DE); Weber, Korbinian, 85049 Ingolstadt (DE)

(56) Entgegenhaltungen:
- EP-A1- 0 662 699
- DE-A1-102012 021 114
- DE-C- 666 920
- GB-A- 191 329 274
- JP-A- S5 923 510
- JP-A- S55 132 007
- JP-B2- 3 054 231
- US-A- 2 568 169
- US-A- 3 270 229

## Beschreibung

Die Erfindung betrifft eine elektrische Maschine mit einem Rotor und einem Stator, wobei der Rotor oder der Stator wenigstens eine Spule mit einem Spulenkern und einer den Spulenkern umgreifenden Spulenwicklung aufweist, wobei die Spulenwicklung über wenigstens eine Windung aus einem um mehrere voneinander beabstandete und parallele Biegeachsen gebogenen, im Schnitt gesehen S-förmigen und/oder mäanderförmigen Flachleiter verfügt. Die Erfindung betrifft weiterhin ein Verfahren zum Herstellen einer elektrischen Maschine.

Aus dem Stand der Technik ist die Druckschrift GB 29274 A bekannt. Diese beschreibt eine stromführende Spule für eine elektromagnetische Vorrichtung. Diese besteht aus einem Streifen oder einem Band, das in einer durchgängigen Länge alternierende kreisförmige oder rechtwinklige obere und untere Bereiche ausbildet, die durch kurze Zwischenstücke miteinander verbunden sind. Der Streifen ist um die Zwischenstücke gebogen, um eine durchgängige Spule oder einen Leiter auszubilden, wobei sich die inneren gebogenen Zwischenstücke radial über einen Außenumfang der Spule erstrecken, um zum Abgreifen einer elektrischen Spannung benutzbar zu sein, und wobei äußere Enden des Streifens als Anschlüsse dienen.

Weiterhin sind aus dem Stand der Technik die Druckschriften DE 666 920 C und JP S59 23510 A bekannt.

Die elektrische Maschine dient der Umwandlung von elektrischer Energie in mechanische Energie oder umgekehrt. In ersterem Fall arbeitet sie als Elektromotor, in letzterem Fall als Generator. Sie weist den Rotor und den Stator auf, wobei der Rotor bezüglich des Stators verlagerbar, insbesondere drehbar, gelagert ist. Entweder der Rotor oder der Stator verfügt über die elektrische Spule, die wiederum den Spulenkern und die Spulenwicklung aufweist. Der Spulenkern besteht bevorzugt aus einem magnetisierbaren Material und dient der Bündelung des mittels der Spulenwicklung erzeugbaren magnetischen Flusses, um so die Induktivität und/oder die magnetische Flussdichtung der Spule zu vergrößern. Der Spulenkern kann auch als Eisenkern bezeichnet werden, auch wenn er nicht notwendigerweise aus Eisen besteht. Vielmehr kann er grundsätzlich aus einem beliebigen magnetisierbaren, insbesondere ferromagnetischen, Material bestehen.

Während des Betriebs der elektrischen Maschine wird die Spulenwicklung von elektrischem Strom durchflossen. Die Spulenwicklung weist insoweit wenigstens einen ersten Anschluss und einen zweiten Anschluss auf, welche über sie elektrisch miteinander verbunden sind. Zum Betreiben der elektrischen Maschine als Elektromotor werden die beiden Anschlüsse an unterschiedliche elektrische Potentiale angeschlossen beziehungsweise mit solchen beaufschlagt. Während eines Betriebs der elektrischen Maschine als Generator stellen sich die unterschiedlichen Potentiale an den beiden Anschlüssen ein und können dort abgegriffen werden.

In Anwendungen mit hohen Anforderungen an die Drehmomenten- beziehungsweise Leistungsdichte werden die zulässigen Stromdichten innerhalb der Spulenwicklung elektrischer Maschinen zunehmend erhöht. Die in der elektrischen Maschine anfallenden Stromwärmeverluste stellen dabei einen bedeutenden und häufig auch den überwiegenden Teil der gesamten Verluste der elektrischen Maschine dar. Unabhängig von der Ausgestaltung der elektrischen Maschine rücken damit Aspekte der thermischen Belastbarkeit, insbesondere bei hochausgenutzten Maschinen, in den Fokus. Aufgrund der Temperaturabhängigkeit von Materialgrößen muss bereits bei der Dimensionierung der elektrischen Maschine ein geeignetes Kühlkonzept entwickelt werden, um sowohl die angestrebte elektromagnetische Funktion als auch die geforderte Standfestigkeit zu gewährleisten.

Es ist Aufgabe der Erfindung, eine elektrische Maschine vorzuschlagen, welche gegenüber bekannten elektrischen Maschinen Vorteile aufweist, insbesondere kostengünstig eine flexible Ausgestaltung, die Realisierung einer effizienten Kühlung und/oder einen energieeffizienten Betrieb ermöglicht.

Dies wird erfindungsgemäß mit einer elektrischen Maschine mit den Merkmalen des Anspruchs 1 erreicht. Dabei ist vorgesehen, dass der Flachleiter zur Reduzierung von Wirbelströmen mehrere, zumindest bereichsweise gegeneinander isolierte Schichten und/oder eine Vielzahl schlitzförmiger Ausnehmungen aufweist, und die Windung einen auf einer ersten Seite des Spulenkerns angeordneten und mit einer freien Kante in Richtung des Spulenkerns ragenden ersten Kontaktschenkel, einen auf einer der ersten Seite gegenüberliegenden zweiten Seite des Spulenkerns angeordneten und mit einer freien Kante in Richtung des Spulenkerns ragenden zweiten Kontaktschenkel sowie einen den ersten Kontaktschenkel und den zweiten Kontaktschenkel verbindenden Verbindungsschenkel aufweist, und die Kontaktschenkel in radialer Richtung gesehen auf gegenüberliegenden Seiten des Verbindungsschenkels vorliegen, und der Verbindungsschenkel über eine erste Biegung mit dem ersten Kontaktschenkel verbunden ist und über eine zweite Biegung mit dem zweiten Kontaktschenkel verbunden ist, wobei die Biegungen jeweils um eine der Biegeachsen gebogen sind, und die erste Biegung Bestandteil des ersten Kontaktschenkels ist und die zweite Biegung Bestandteil des zweiten Kontaktschenkels ist, und wobei der erste Kontaktschenkel im Bereich einer ersten Biegung und/oder der zweite Kontaktschenkel im Bereich einer zweiten Biegung von dem Verbindungsschenkel jeweils zur Ausbildung eines Fluidkanals beabstandet angeordnet sind/ist.

Grundsätzlich ist vorgesehen, dass die Spulenwicklung über wenigstens eine Windung aus einem um mehrere voneinander beabstandete und parallele Biegeachsen gebogenen, im Schnitt gesehen S-förmigen und/oder mäanderförmigen Flachleiter verfügt.

Die Spulenwicklung weist genau eine oder bevorzugt mehrere Windungen auf. In letzterem Fall sind die mehreren Windungen elektrisch miteinander verbunden, um gemeinsam die Spulenwicklung auszugestalten. Wie bereits vorstehend erläutert, weist die Spulenwicklung an gegenüberliegenden Enden den ersten Anschluss und den zweiten Anschluss auf. Der erste Anschluss ist im Falle der mehreren Windungen insoweit an einer der Windungen und der zweite Anschluss an einer anderen der Windungen vorgesehen, wobei diese beiden Windungen entweder unmittelbar miteinander oder lediglich mittelbar über wenigstens eine weitere Windung, vorzugsweise über mehrere weitere Windungen, elektrisch miteinander verbunden sind. Die Windung oder zumindest eine der Windungen weist die beschriebene Ausgestaltung auf. Besonders bevorzugt sind jedoch mehrere der Windungen, insbesondere alle der Windungen, auf die beschriebene Art und Weise ausgestaltet. Sofern nachfolgend lediglich auf eine einzige Windung eingegangen wird, so sind diese Ausführungen stets auf die anderen Windungen - sofern vorgesehen - übertragbar.

Die Windung besteht aus dem Flachleiter, allgemeiner ausgedrückt also aus einem flachen Metallkörper, welcher in zwei senkrecht aufeinander stehenden Richtungen deutlich größere Abmessungen aufweist als in einer dritten, auf beiden erstgenannten Richtungen senkrecht stehenden Richtungen. In einer der erstgenannten Richtungen kann der Flachleiter wiederum deutlich größere Abmessungen aufweisen als in einer anderen der erstgenannten Richtungen.

Der Flachleiter liegt bevorzugt als Walzprodukt vor. Walzprodukte zeichnen sich, insbesondere im Vergleich zu gießtechnisch hergestellten Produkten, durch einen besonders hohen Reinheitsgrad, eine hohe und einheitliche Dichte des Materials und eine hohe elektrische Leitfähigkeit aus. Zudem besitzen sie sehr glatte und saubere Oberflächen und/oder abgerundete Kanten.

Der Flachleiter kann beispielsweise vor dem Biegen um die Biegeachsen lackiert werden. Aufgrund der sehr glatten Oberfläche ist lediglich eine dünne Lackschicht notwendig, was zum einen eine hohe Energiedichte und zum anderen eine gute Kühlung der Spule ermöglicht. Als Material für den Flachleiter kann grundsätzlich jedes elektrisch leitfähige Material verwendet werden. Besonders bevorzugt wird jedoch Kupfer oder Aluminium beziehungsweise eine Kupferlegierung oder eine Aluminiumlegierung verwendet.

Die Windung ist einstückig und materialeinheitlich ausgestaltet. Selbstverständlich kann dies in einer bevorzugten Ausführungsform auch für die gesamte Spulenwicklung, bestehend aus mehreren Windungen, gelten. Zur Ausbildung der Windung wird der Flachleiter derart gebogen, dass er nachfolgend - zumindest in Draufsicht - S-förmig und/oder mäanderförmig ist. Beispielsweise weist er hierzu mehrere Schenkel auf, die über Biegungen ineinander übergehen. Jeder der Schenkel ist also über eine der Biegungen mit einem benachbarten der Schenkel verbunden. Unter der S-Form wird auch eine Form verstanden, die eine um eine als Hochachse gespiegelten S entspricht beziehungsweise ähnelt. In Draufsicht weist die Windung beziehungsweise der Flachleiter insoweit einen sogenannten S-Schlag auf.

Im Schnitt gesehen verlaufen die Schenkel bevorzugt wenigstens bereichsweise parallel zueinander, insbesondere verlaufen alle Schenkel jeder Windung zumindest bereichsweise parallel. Die S-Form wird beispielsweise mit drei Schenkeln pro Windung erzielt. Zur Realisierung der Mäanderform kann der Flachleiter zur gemeinsamen beziehungsweise gleichzeitigen Ausbildung mehrerer Windungen, insbesondere aller Windungen, der Spulenwicklung dienen. Die S-förmige oder mäanderförmige Gestalt wird durch das Biegen um die mehreren voneinander beabstandeten und parallelen Biegeachsen erreicht.

Die Biegeachsen liegen dabei beispielsweise in einer Materialebene des Flachleiters. Insbesondere liegen die Biegeachsen vor dem Biegen in einer Ebene, die von den senkrecht aufeinander stehenden Richtungen mit den größten Abmessungen des Flachleiters aufgespannt wird. Besonders bevorzugt weist jede der Windung mindestens zwei, insbesondere genau zwei, Biegeachsen auf, um welche der Flachleiter gebogen ist. Das Biegen erfolgt im Schnitt gesehen bevorzugt derart, dass ein Richtungswechsel realisiert ist. Die Biegung erfolgt daher um mehr als 90°, bevorzugt um einen Winkel von mehr als 90° und höchstens 180°, bevorzugt um 180°. Jede der Biegungen ist in letzterem Fall im Schnitt gesehen im Wesentlichen U-förmig.

Die Spule ist beispielsweise als Zahnspule ausgestaltet, weist also einen zahnförmigen Spulenkern auf, der von der Spulenwicklung umgriffen wird. Alternativ kann die Spulenwicklung jedoch als Teil einer verteilten Wicklung der elektrischen Maschine vorliegen. Hierzu sind die Windungen entsprechend anzupassen, insbesondere mit entsprechenden Anschlüssen zu versehen und/oder gegeneinander zu isolieren. Das Isolieren kann beispielsweise durch Beschichten beziehungsweise Lackieren erfolgen, worauf vorstehend bereits hingewiesen wurde.

Der Flachleiter kann grundsätzlich monolithisch aufgebaut sein, also als durchgehendes und ununterbrochenes Element vorliegen. Vor allem in Bereichen, in welchen viele Magnetfeldlinien die Wicklung beziehungsweise die wenigstens eine Windung der Spule durchsetzen, wie beispielsweise ein Streufeld in der Nähe von Zahnköpfen, können durch parasitäre Wirbelströme zusätzliche Stromwärmeverluste auftreten. Entsprechend ist es von Vorteil, wenn der Flachleiter besonders flach und/oder schmal ausgestaltet ist, also beispielsweise ein Verhältnis zwischen seinen beiden geringeren Abmessungen aufweist, welches unter einem bestimmten Wert liegt.

Derartige Flachleiter weisen jedoch eine vergleichsweise geringe Festigkeit auf. Überdies ergibt sich die optimale Materialstärke des Flachleiters während des elektromagnetischen Entwurfs der elektrischen Maschine aus der Anzahl der Windungen und der zur Verfügung stehenden Nutfläche der elektrischen Maschine. Beim Stanzen der wenigstens einen Windung beziehungsweise der mehreren Windungen aus einem Blech beziehungsweise einem Blechcoil, kann aufgrund der zu erzielenden Form der Windung relativ viel Verschnitt anfallen. Außerdem sind der Umgang und das Nachbearbeiten der komplexen und meist filigranen Geometrie der Windung aufwändig. Schließlich ist die kleinste Abmessung des Flachleiters konstant, sodass keine Variation dieser Abmessungen, beispielsweise für unterschiedliche Windungen der Spulenwicklung, möglich ist.

Aus diesem Grund soll zur Reduzierung von Wirbelströmen der Flachleiter entweder mehrere, zumindest bereichsweise gegeneinander isolierte Schichten oder eine Vielzahl schlitzförmiger Ausnehmungen aufweisen. Auch eine Kombination dieser Ausgestaltungen ist selbstverständlich möglich. Beispielsweise verfügt der Flachleiter über mindestens zwei derartige Schichten. Bevorzugt ist jedoch eine größere Anzahl an Schichten vorgesehen, nämlich eine Anzahl von mindestens fünf Schichten. Die Schichten, aus welchen der Flachleiter besteht, sind zumindest bereichsweise gegeneinander isoliert, also elektrisch voneinander separiert. Zusätzlich oder alternativ kann der Flachleiter die schlitzförmigen Ausnehmungen aufweisen.

Sollen die mehreren Schichten mit der Vielzahl schlitzförmiger Ausnehmungen kombiniert werden, so kann es beispielsweise vorgesehen sein, dass wenigstens einige der Schichten, vorzugsweise alle Schichten des Flachleiters, jeweils über wenigstens eine, vorzugsweise mehrere Ausnehmungen verfügen. Die Schichten werden zum Ausbilden des Flachleiters nun derart zueinander angeordnet, dass die Ausnehmungen beziehungsweise Ränder der Ausnehmungen der Schichten miteinander fluchten oder versetzt zueinander angeordnet sind. In letzterem Fall kann das Versetzen der Ausnehmungen derart erfolgen, dass die Ausnehmungen zweier unmittelbar aneinander anliegender Schichten in jeder Richtung gesehen voneinander beabstandet angeordnet sind, sodass die Ausnehmung insbesondere nicht in Fluidverbindung miteinander stehen.

Es kann zudem vorgesehen sein, dass eine der Schichten, in welcher wenigstens eine Ausnehmung beziehungsweise mehrere Ausnehmungen angeordnet sind, jeweils an einer der Schichten anliegen, welche ausnehmungsfrei ausgestaltet ist, also keine Ausnehmungen aufweist. Besonders bevorzugt ist der Flachleiter aus mehreren Schichten aufgebaut, wobei sich Ausnehmungen aufweisende Schichten und ausnehmungsfreie Schichten abwechseln.

Eine bevorzugte Ausgestaltung sieht vor, dass der Flachleiter als Blech oder Metallband vorliegt. Unter dem Blech ist vorzugsweise ein tafelförmiges Metallprodukt zu verstehen. Das Metallband dagegen kann zwar im Querschnitt dieselben Abmessungen aufweisen wie das Blech, ist jedoch bevorzugt als Endlosprodukt beziehungsweise Rollenware ausgestaltet.

Eine bevorzugte Weiterbildung der Erfindung sieht vor, dass die Schichten in einem ersten Anschlussbereich und einem von dem ersten Anschlussbereich beabstandeten zweiten Anschlussbereich elektrisch miteinander verbunden sind und zwischen dem ersten Anschlussbereich und dem zweiten Anschlussbereich zumindest bereichsweise, insbesondere durchgehend, elektrisch voneinander isoliert sind. In dem ersten Anschlussbereich liegt der vorstehend bereits erwähnte erste Anschluss und in dem zweiten Anschlussbereich der zweite Anschluss vor. Die Schichten sind in den beiden Anschlussbereichen jeweils elektrisch miteinander verbunden und dazwischen zumindest bereichsweise, insbesondere durchgehend, elektrisch voneinander isoliert. In letzterem Fall liegen die Schichten zwischen ihren Anschlussbereichen insoweit elektrisch parallel zueinander vor.

Verfügt die Spulenwicklung über lediglich die eine Windung, so liegen beide Anschlussbereiche an dieser Windung vor. Werden aus dem Flachleiter jedoch mehrere Windungen der Spulenwicklung ausgestaltet, so liegt der erste Anschlussbereich vorzugsweise an einer der Windungen und der zweite Anschlussbereich an einer anderen der Windungen vor. Diese beiden Windungen können unmittelbar miteinander verbunden sein oder lediglich mittelbar über wenigstens eine weitere Windung elektrisch verbunden sein. Bevorzugt liegen die Schichten über die Windungen durchgehend vor, sodass also auch für die mehreren Windungen gilt, dass die Schichten lediglich in dem ersten Anschlussbereich und dem zweiten Anschlussbereich elektrisch miteinander verbunden sind, zwischen diesen jedoch zumindest bereichsweise, insbesondere durchgehend, elektrisch voneinander isoliert sind. Es kann also vorgesehen sein, dass die Schichten des Flachleiters für wenigstens eine der Windungen durchgehend elektrisch voneinander isoliert sind und insoweit elektrisch parallel zueinander verlaufen.

Eine besonders bevorzugte weitere Ausgestaltung der Erfindung sieht vor, dass die Schichten fest miteinander verbunden sind, insbesondere durch Löten und/oder Kleben. Das Löten ist beispielsweise in dem ersten Anschlussbereich und/oder dem zweiten Anschlussbereich vorgesehen. Das Kleben kann in Bereichen erfolgen, in welchen die Schichten elektrisch voneinander isoliert sein sollen. Das Kleben kann beispielsweise mittels eines Lacks oder dergleichen erfolgen.

Eine bevorzugte Ausführungsform sieht vor, dass die Ausnehmungen randgeschlossen im Flachleiter ausgebildet sind. Hierunter ist zu verstehen, dass die Ausnehmungen in wenigstens einer Richtung einen durchgehenden Rand aufweisen, welcher die jeweilige Ausnehmung vollständig umgreift. Die Ausnehmungen sind insoweit in wenigstens einer Richtung von Rändern des Flachleiters beabstandet angeordnet beziehungsweise ausgebildet und durchgreifen diese nicht. Mit einer derartigen Anordnung der Ausnehmungen wird eine besonders effiziente Dämpfung der Wirbelströme realisiert.

Im Rahmen einer weiteren Ausgestaltung der Erfindung ist vorgesehen, dass die Ausnehmungen als eine Oberfläche des Flachleiters durchgreifende Vertiefungen oder als der Flachleiter beidseitig durchgreifende Durchtrittsöffnungen ausgebildet sind. Grundsätzlich können beide Ausgestaltungen der Dämpfung beziehungsweise Unterbrechung der Wirbelströme dienen. Die Vertiefungen greifen bezogen auf eine Materialstärke des Flachleiters beispielsweise höchstens 90 %, höchstens 75 %, höchstens 50 % oder höchstens 25 % des Flachleiters, jedenfalls also nicht vollständig, sodass die Vertiefungen einen durchgehenden Boden aufweisen. Alternativ können die Ausnehmungen als Durchtrittsöffnungen vorliegen, welche den Flachleiter in einer Richtung vollständig durchgreifen.

Eine weitere Ausführungsform der Erfindung sieht vor, dass wenigstens zwei der Ausnehmungen in Richtung ihrer Längserstreckung überlappend angeordnet sind. Unter der Richtung ihrer Längserstreckung ist die Richtung zu verstehen, in welchen die Abmessungen jeweils ihre größten Abmessungen aufweisen. In dieser Richtung sind die beiden Ausnehmungen insoweit nebeneinander angeordnet. Beispielsweise ist eine gestaffelte Anordnung der in dem Flachleiter ausgebildeten Ausnehmungen vorgesehen.

Die Erfindung sieht vor, dass die Windung einen auf einer ersten Seite des Spulenkerns angeordneten und mit einer freien Kante in Richtung des Spulenkerns ragenden ersten Kontaktschenkel, einen auf einer der ersten Seite gegenüberliegenden zweiten Seite des Spulenkerns angeordneten und mit einer freien Kante in Richtung des Spulenkerns ragenden zweiten Kontaktschenkel sowie einen den ersten Kontaktschenkel und den zweiten Kontaktschenkel verbindenden Verbindungsschenkel aufweist. Jede Windung weist also die drei genannten Schenkel, nämlich die beiden Kontaktschenkel und den Verbindungsschenkel, auf. Diese sind miteinander einstückig und materialeinheitlich ausgestaltet, wobei die Ausgestaltung durch das Biegen um die Biegeachsen aus dem Blech oder Metallband erfolgt.

Die S-Form der Windung, welche im Schnitt gesehen stark gestaucht ist, wird erzielt, indem die freie Kante des ersten Kontaktschenkels in eine erste Richtung und die freie Kante des zweiten Kontaktschenkels in eine der ersten Richtung entgegengesetzte zweite Richtung ragt. Dabei liegt der erste Kontaktschenkel auf der ersten Seite des Spulenkerns und der zweite Kontaktschenkel auf der zweiten Seite des Spulenkerns vor, sodass die Kontaktschenkel von dem Spulenkern im Schnitt gesehen voneinander separiert sind. Im Schnitt gesehen liegt der Verbindungsschenkel zwischen den beiden Kontaktschenkeln vor. Das bedeutet, dass eine von den senkrecht aufeinander stehenden Richtungen, in welchen der Verbindungsschenkel seine größten Abmessungen aufweist, aufgespannte Ebene zwischen den beiden Kontaktschenkeln liegt.

Die Erfindung sieht vor, dass der Verbindungsschenkel mit dem ersten Kontaktschenkel über eine erste Biegung des ersten Kontaktschenkels und mit dem zweiten Kontaktschenkel über eine zweite Biegung des zweiten Kontaktschenkels verbunden ist, wobei die erste Biegung und die zweite Biegung jeweils um eine der Biegeachsen gebogen sind. Die erste Biegung ist insoweit dem ersten Kontaktschenkel und die zweite Biegung dem zweiten Kontaktschenkel zugeordnet. Über die jeweilige Biegung ist der entsprechende Kontaktschenkel mit dem Verbindungsschenkel verbunden. Der Verbindungsschenkel liegt mithin zwischen den Biegungen und ist bevorzugt plan, insbesondere vollständig. Jede der Biegungen entsteht aufgrund einer Biegung des Blechs oder Metallbands um eine der voneinander beabstandeten und parallelen Biegeachsen.

Im Rahmen einer weiteren Ausführungsform der Erfindung ist vorgesehen, dass in dem Verbindungsschenkel eine randoffene oder randgeschlossene Spulenkernaufnahme für den Spulenkern ausgebildet ist. Vorstehend wurde bereits erläutert, dass die beiden Kontaktschenkel auf gegenüberliegenden Seiten des Spulenkerns angeordnet sein sollen. Sie nehmen insoweit den Spulenkern zwischen sich auf. Um ein Aufbringen der Spulenwicklung beziehungsweise Windung auf den Spulenkern zu ermöglichen, weist nun der die Kontaktschenkel miteinander verbindende Verbindungsschenkel die Spulenkernaufnahme auf. Diese kann entweder randoffen oder randgeschlossen in dem Verbindungsschenkel vorliegen. In ersterem Fall durchgreift die Spulenkernaufnahme wenigstens einen Rand des Verbindungsschenkels, während in letzterem Fall der Rand der Spulenkernaufnahme durchgehend geschlossen ist.

Eine bevorzugte Weiterbildung der Erfindung sieht vor, dass zur Bildung der Spulenwicklung mehrere Windungen aneinander anliegend angeordnet sind. Dies ist insbesondere der Fall, falls die Windung aus dem gebogenen Blech besteht, wobei jede Windung separat hergestellt wird. Nachfolgend werden die separaten Windungen zur Spulenwicklung zusammengefügt. Dabei werden sie derart angeordnet, dass sie aneinander anliegen. Dabei kann es vorgesehen sein, dass die Windungen lediglich derart aneinandergepresst werden, dass eine elektrische Verbindung zwischen ihnen vorliegt. Selbstverständlich kann es jedoch auch vorgesehen sein, die Windungen beispielsweise stoffschlüssig aneinander zu befestigen, insbesondere durch Löten oder dergleichen.

Es ist beispielsweise vorgesehen, dass die erste Biegung einer der Windungen an der ersten Biegung einer benachbarten Windung anliegt. Zusätzlich oder alternativ kann die erste Windung jedoch auch an dem ersten Kontaktschenkel, dem zweiten Kontaktschenkel und/oder dem Verbindungsschenkel anliegen. Zusätzlich oder alternativ liegt die zweite Biegung einer der Windungen an der zweiten Biegung der anderen Windung an. Auch hier kann jedoch ein Anliegen an dem ersten Kontaktschenkel, dem zweiten Kontaktschenkel oder dem Verbindungsschenkel vorgesehen sein.

Die Erfindung sieht vor, dass der erste Kontaktschenkel im Bereich der ersten Biegung und/oder der zweite Kontaktschenkel im Bereich der zweiten Biegung von dem Verbindungsschenkel jeweils zur Ausbildung eines Fluidkanals beabstandet angeordnet sind/ist. Durch die beiden Biegungen entstehen zwischen dem jeweiligen Kontaktschenkel und dem Verbindungsschenkel die Fluidkanäle. Diese können zur Kühlung der elektrischen Maschine beziehungsweise der Spule mit einem Kühlfluid beaufschlagt werden. Die Fluidkanäle liegen bevorzugt randgeschlossen vor. Hierzu sind die Kontaktschenkel derart ausgestaltet, dass sie unter Ausbildung der Fluidkanäle jeweils mit dem Verbindungsschenkel in Anlagekontakt treten, sodass der Fluidkanal im Schnitt gesehen vollständig von dem jeweiligen Kontaktschenkel und dem Verbindungsschenkel umgriffen ist.

Eine weitere bevorzugte Ausführungsform der Erfindung sieht vor, dass der erste Kontaktschenkel und/oder der zweite Kontaktschenkel sich in Richtung seiner jeweiligen freien Kante dem Verbindungsschenkel im Schnitt gesehen annähern/annähert, sodass zwischen der Windung und einer an der Windung anliegenden weiteren Windung ein weiterer Fluidkanal vorliegt. Der jeweilige Kontaktschenkel verläuft also auf den Verbindungsschenkel zu, nämlich in Richtung seiner freien Kante. Besonders bevorzugt liegt er zumindest bereichsweise an dem Verbindungsschenkel an, sodass auf die vorstehend genannte Art und Weise der Fluidkanal im Schnitt gesehen umschlossen ist.

Durch das Annähern des jeweiligen Kontaktschenkels an den Verbindungsschenkel stellt die erste Biegung (im Falle des ersten Kontaktschenkels) beziehungsweise die zweite Biegung (im Falle des zweiten Kontaktschenkels) eine Erhebung über die weiteren Bereiche der Windung beziehungsweise die Stelle mit den im Schnitt gesehen größten Abmessungen in einer Erstreckungsrichtung des Spulenkerns dar. Unter der Erstreckungsrichtung des Spulenkerns ist dabei insbesondere eine Höhe des Spulenkerns zu verstehen beziehungsweise eine Erstreckung des Spulenkerns in radialer Richtung bezüglich einer Drehachse des Rotors.

Liegen mehrere Windungen aneinander an, so werden diese von den Biegungen voneinander beabstandet. Entsprechend liegt der weitere Fluidkanal vor, welcher einerseits von der Windung und andererseits von der weiteren Windung begrenzt wird. Beispielsweise wird der weitere Fluidkanal einerseits von dem ersten Kontaktschenkel oder dem zweiten Kontaktschenkel der Windung und andererseits von dem Verbindungsschenkel der weiteren Windung - im Schnitt gesehen - begrenzt.

Eine weitere Ausführungsform der Erfindung sieht vor, dass mehrere Windungen gemeinsam von dem meanderförmigen Metallband gebildet sind. Besonders bevorzugt werden alle Windungen der Spulenwicklung gemeinsam von dem Metallband ausgebildet. Dieses wird hierzu zunächst bearbeitet und anschließend um die voneinander beabstandeten und parallelen Biegeachsen gebogen, wobei pro Windung wie bereits erläutert mehrere Biegeachsen vorgesehen sind.

Das Bearbeiten des Metallbands vor dem Biegen kann beispielsweise trennend erfolgen, also beispielsweise durch Zerteilen, Spanen oder Abtragen. Unter das Zerteilen fällt beispielsweise Scherschneiden beziehungsweise Stanzen. Die spanende Bearbeitung kann beispielsweise durch Sägen erfolgen. Das Abtragen wiederum kann thermisch, chemisch oder elektrochemisch erfolgen, beispielsweise durch Erodieren, insbesondere Funkenerodieren, oder Laserschneiden. Das Funkenerodieren kann bevorzugt durch Drahterodieren durchgeführt werden.

Es kann vorgesehen sein, das Metallband vor dem Bearbeiten zu beschichten, insbesondere zu lackieren, und mithin elektrisch zu isolieren. Nach dem Bearbeiten kann, muss jedoch nicht eine weitere Beschichtung beziehungsweise Lackierung vorgenommen werden. Üblicherweise ist die durch das Bearbeiten entstehende, nicht isolierte Oberfläche derart klein, dass das erneute Beschichten unterbleiben kann. In diesem Fall folgt unmittelbar auf das Bearbeiten das Biegen um die Biegeachsen.

Das Bearbeiten kann derart vorgenommen werden, dass nach dem Biegen um die Biegeachsen der Fluidkanal und/oder der weitere Fluidkanal vorliegen. Während des Bearbeitens werden diese insoweit vorbereitet. Dies kann beispielsweise durch Trennen und/oder Umformen des Metallbands erfolgen, beispielsweise durch Stanzen oder Pressen. Auch das Einbringen einer Gravur ist möglich. Es kann jedoch auch vorgesehen sein, dass vor dem Biegen zusätzliches Material auf das Metallband aufgetragen wird, sodass nach dem Biegen der Fluidkanal beziehungsweise der weitere Fluidkanal vorliegt.

Es kann in einer weiteren Ausführungsform der Erfindung vorgesehen sein, dass die Windungen im Schnitt gesehen zumindest teilweise unterschiedlich breit sind. Bevorzugt verändert sich die Breite der Windungen in einer Richtung kontinuierlich, sodass beispielsweise jeweils zwei aufeinanderfolgende Windungen unterschiedliche Breiten aufweisen. Insbesondere erfolgt die Zunahme der Breite der Windungen über die Höhe der Spulenwicklung hinweg durchgehend, beispielsweise ausgehend von einem Fuß des Spulenkerns in Richtung eines Kopfs des Spulenkerns. Weil der Spulenkern üblicherweise bezüglich der Drehachse des Rotors in radialer Richtung nach außen ragt, wird auf diese Art und Weise eine optimale Platzausnutzung realisiert. Die unterschiedlichen Breiten der Windungen lassen sich besonders bevorzugt während des Bearbeitens des Metallbands auf einfache Art und Weise realisieren.

Die Erfindung betrifft weiterhin ein Verfahren zum Herstellen einer elektrischen Maschine mit einem Rotor und einem Stator, insbesondere einer elektrischen Maschine gemäß den vorstehenden Ausführungen, wobei der Rotor oder der Stator wenigstens eine Spule mit einem Spulenkern und einer den Spulenkern umgreifenden Spulenwicklung aufweist, wobei die Spulenwicklung über wenigstens eine Windung aus einem im Schnitt gesehen S-förmigen und/oder mäanderförmigen Flachleiter verfügt. Dabei ist vorgesehen, dass der Flachleiter zur Reduzierung von Wirbelströmen mehrere, zumindest bereichsweise gegeneinander isolierte Schichten und/oder eine Vielzahl schlitzförmiger Ausnehmungen aufweist und zum Ausbilden der Windung um mehrere voneinander beabstandete und parallele Biegeachsen gebogen wird, und die Windung einen auf einer ersten Seite des Spulenkerns angeordneten und mit einer freien Kante in Richtung des Spulenkerns ragenden ersten Kontaktschenkel, einen auf einer der ersten Seite gegenüberliegenden zweiten Seite des Spulenkerns angeordneten und mit einer freien Kante in Richtung des Spulenkerns ragenden zweiten Kontaktschenkel sowie eine den ersten Kontaktschenkel und den zweiten Kontaktschenkel verbindenden Verbindungsschenkel aufweist, und die Kontaktschenkel in radialer Richtung gesehen auf gegenüberliegenden Seiten des Verbindungsschenkels vorliegen, und der Verbindungsschenkel über eine erste Biegung mit dem ersten Kontaktschenkel verbunden ist und über eine zweite Biegung mit dem zweiten Kontaktschenkel verbunden ist, wobei die Biegungen jeweils um eine der Biegeachsen gebogen sind, und die erste Biegung Bestandteil des ersten Kontaktschenkels ist und die zweite Biegung Bestandteil des zweiten Kontaktschenkels ist, und wobei der erste Kontaktschenkel im Bereich der ersten Biegung und/oder der zweite Kontaktschenkel im Bereich einer zweiten Biegung von dem Verbindungsschenkel jeweils zur Ausbildung eines Fluidkanals beabstandet angeordnet sind/ist.

Auf die Vorteile einer derartigen Ausgestaltung der elektrischen Maschine beziehungsweise einer derartigen Vorgehensweise wurde bereits hingewiesen. Sowohl das Verfahren als auch die elektrische Maschine können gemäß den vorstehenden Ausführungen weitergebildet sein, sodass insoweit auf diese verwiesen wird.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Querschnittsdarstellung durch einen Bereich einer elektrischen Maschine, nämlich durch eine Spule, die einen Spulenkern und eine Spulenwicklung aufweist,
- Figur 2: eine schematische Darstellung eines Flachleiters zur Herstellung der Spulenwicklung in einer ersten Ausführungsform,
- Figur 3: eine schematische Darstellung des Flachleiters in einer zweiten Ausführungsform,
- Figur 4: eine schematische Darstellung einer ersten Variante des Flachleiters,
- Figur 5: eine schematische Darstellung einer zweiten Variante des Flachleiters, sowie
- Figur 6: eine schematische Darstellung einer dritten Variante des Flachleiters.

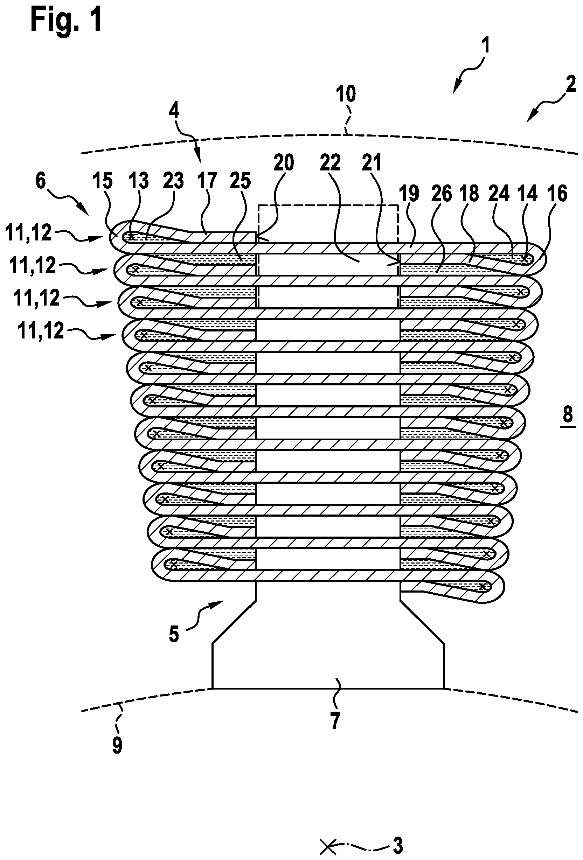

Die Figur 1 zeigt einen Querschnitt durch einen Bereich einer elektrischen Maschine 1, die einen Stator 2 und einen hier nicht dargestellten Rotor aufweist. Der Rotor ist bezüglich des Stators 2 um eine Drehachse 3 drehbar gelagert. Der Stator 2 verfügt über wenigstens eine Spule 4, insbesondere über eine Vielzahl von gleichmäßig über seinen Umfang verteilten Spulen 4, von welchen hier lediglich eine einzige dargestellt ist. Die Spule 4 setzt sich grundsätzlich aus einem Spulenkern 5 sowie einer Spulenwicklung 6 zusammen. Der Spulenkern 5 weist beispielsweise im Bereich seines Fußes 7 eine Verdickung auf, mittels welcher er formschlüssig an einem hier nicht dargestellten Joch des Stators 2 befestigt werden kann. Bezüglich der Drehachse 3 ragt der Spulenkern 5 in radialer Richtung nach außen.

Zur Kühlung des Stators 2 mittels eines Kühlfluids ist die Spule 4, vorzugsweise mitsamt des Jochs, in einem Strömungskanal 8 angeordnet, der in radialer Richtung innenseitig und in radialer Richtung außenseitig jeweils von einer Kanalwand 9 beziehungsweise 10 begrenzt ist. Die Kanalwände 9 und 10 verlaufen vorzugsweise in Umfangsrichtung durchgehend und schließen entsprechend durchgehend zwischen sich den Strömungskanal 8 ein. Der Strömungskanal 8 kann mit dem Kühlfluid beaufschlagt werden, welches bezüglich der Drehachse 3 in axialer Richtung strömt beziehungsweise dessen Hauptströmungsrichtung in axialer Richtung verläuft.

Um eine besonders flexible Ausgestaltung der Spule 4 und eine hervorragende Kühlung zu realisieren, weist die Spulenwicklung 6 mehrere Windungen 11 auf, von welchen hier lediglich einige beispielhaft gekennzeichnet sind. Die Windungen bestehen jeweils aus einem im Querschnitt gesehen S-förmigen oder umgekehrt S-förmigen Flachleiter 12, der hier als Blech vorliegt. Der Flachleiter 12 ist pro Windung 11 um zwei voneinander beabstandete und parallele Biegeachsen 13 und 14 gebogen. Durch das Biegen ergeben sich zwei Biegungen 15 und 16.

Jede Windung 11 weist einen ersten Kontaktschenkel 17, einen zweiten Kontaktschenkel 18 sowie einen Verbindungsschenkel 19 auf. Diese sind nur für eine der Windungen 11 gekennzeichnet. Die Biegung 15 ist Bestandteil des ersten Kontaktschenkels 17, die Biegung 16 Bestandteil des zweiten Kontaktschenkels 18. Der Verbindungsschenkel 19 ist über die Biegung 15 mit dem ersten Kontaktschenkel 17 und über die Biegung 16 mit dem zweiten Kontaktschenkel 18 verbunden. Die Kontaktschenkel 17 und 18 sind im Querschnitt gesehen, also in Umfangsrichtung, auf gegenüberliegenden Seiten des Spulenkerns 5 angeordnet. Insbesondere weist jeder der Kontaktschenkel 17 und 18 eine freie Kante 20 beziehungsweise 21 auf, die in Richtung des Spulenkerns 5 ragt.

Dabei kann der jeweilige Kontaktschenkel 17 beziehungsweise 18 mit der entsprechenden freien Kante 20 beziehungsweise 21 an dem Spulenkern 5 anliegen. Zur S-förmigen Ausgestaltung der Windung 11 liegen die Kontaktschenkel 17 und 18 in radialer Richtung gesehen auf gegenüberliegenden Seiten des Verbindungsschenkels 19 vor. Der Verbindungsschenkel 19 weist zudem eine Spulenkernaufnahme 22 auf, welche hier lediglich ansatzweise zu erkennen ist. Der Verbindungsschenkel 19 umgreift den Spulenkern 5 in axialer Richtung gesehen auf zumindest einer Seite.

Der Flachleiter 12 ist derart gebogen, dass im Bereich der Biegungen 15 und 16 zwischen dem jeweiligen Kontaktschenkel 17 beziehungsweise 18 und dem Verbindungsschenkel 19 ein Fluidkanal 23 beziehungsweise 24 ausgebildet ist. Es ist zudem zu erkennen, dass zur Bildung der Spulenwicklung 6 mehrere Windungen 11 aneinander anliegend angeordnet sind. Weil jedoch aufgrund der Biegungen 15 und 16 eine Art Verdickung der Windungen 11 ausgebildet ist, sind diese in radialer Richtung wenigstens bereichsweise voneinander beabstandet. Zwischen benachbarten Windungen 11 liegen daher weitere Fluidkanäle 25 und 26 vor. Bezogen auf eine der Windungen 11 liegt der Fluidkanal 25 beispielsweise in radialer Richtung außen und der Fluidkanal 26 in radialer Richtung innen von dieser Windung 11 vor.

Vorstehend wurde bereits erläutert, dass üblicherweise eine Vielzahl von Spulen 4 in Umfangsrichtung benachbart zueinander angeordnet sind. Um den zur Verfügung stehenden Bauraum möglichst effizient zu nutzen, sollen die Windungen 11 im Querschnitt gesehen zumindest teilweise unterschiedlich breit sein. In dem hier dargestellten Ausführungsbeispiel nimmt die Breite der Windungen 11 ausgehend von dem Fuß 7 des Spulenkerns 5 in Richtung eines Kopfs des Spulenkerns 5 kontinuierlich und gleichmäßig zu.

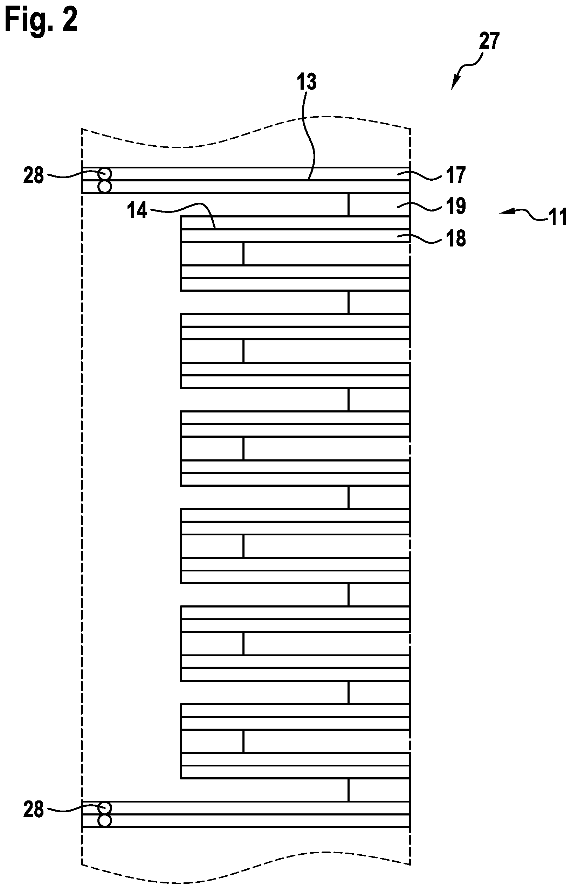

Die Figur 2 zeigt einen als Metallband ausgebildeten Flachleiter 27, aus welchem der Spulenkern 5 hergestellt werden kann. Während vorstehend lediglich auf den Flachleiter 12 eingegangen wurde, aus welchem die Windungen 11 bestehen, sind die entsprechenden Ausführungen auch für den Flachleiter 27 heranzuziehen, sodass auf diese verwiesen wird. Der Flachleiter 27, dessen ursprüngliche Form hier lediglich angedeutet ist, wurde bearbeitet, um das Ausbilden der Spule 4, bestehend aus mehreren Windungen 11, durch das Biegen um die mehreren Biegeachsen 13 und 14 zu ermöglichen. Es ist leicht erkennbar, dass der Flachleiter 27 hierzu, beispielsweise durch Trennen, in eine meanderförmige Form gebracht wurde.

Am Anfang und am Ende sind Anschlussfahnen 28 zur elektrischen Kontaktierung vorgesehen. Angedeutet sind ebenfalls die Kontaktschenkel 17 und 18 sowie der Verbindungsschenkel 19 einer der Windungen 11 sowie die für die Windung 11 zu realisierenden Biegeachsen 13 und 14. Wird der Flachleiter 27 um die Biegeachsen 13 und 14 für jede der Windungen 11 gebogen, so ergibt sich erneut der im Querschnitt gesehen S-förmige beziehungsweise meanderförmige Verlauf, analog zu der vorstehenden Beschreibung.

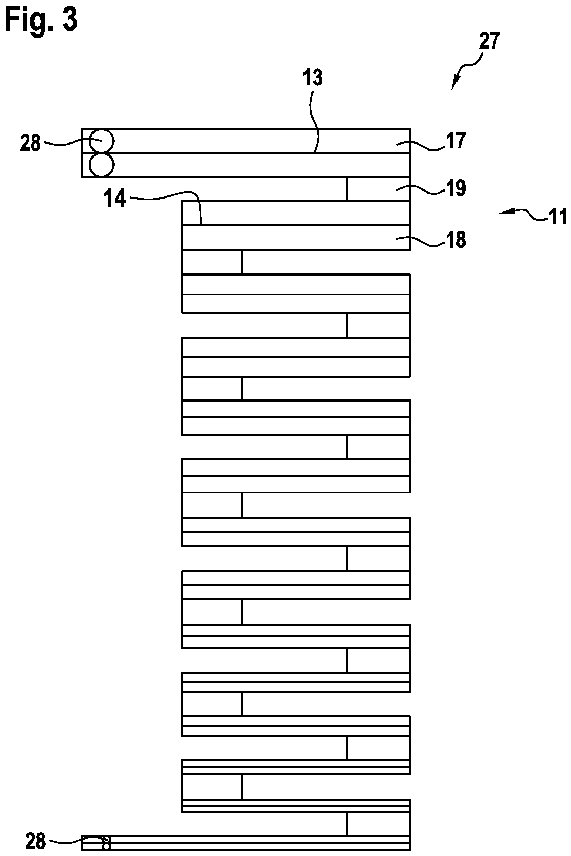

Die Figur 3 zeigt eine zweite Ausführungsform des Flachleiters 27. Es wird auf die vorstehenden Ausführungen verwiesen. Es ist deutlich erkennbar, dass eine kontinuierliche Abmessungsveränderung vorliegt. Auf diese Art und Weise lässt sich einfach die vorstehend beschriebene Zunahme der Breite der Windungen 11 realisieren.

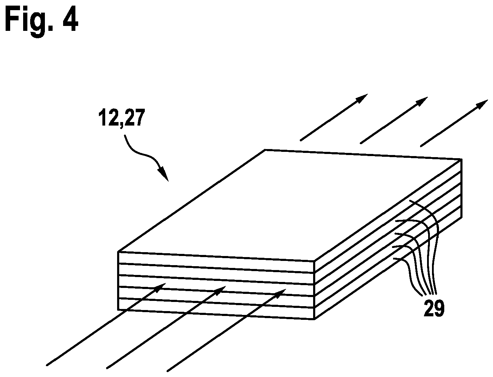

Die Figur 4 zeigt eine erste Variante des Flachleiters 12 beziehungsweise 27. Es ist erkennbar, dass diese sich aus mehreren Schichten 29 zusammensetzt, welche hier lediglich beispielhaft angedeutet sind. Die Schichten 29 sind zumindest bereichsweise gegeneinander elektrisch isoliert. Auf diese Art und Weise kann eine Reduzierung von Wirbelströmen erzielt werden.

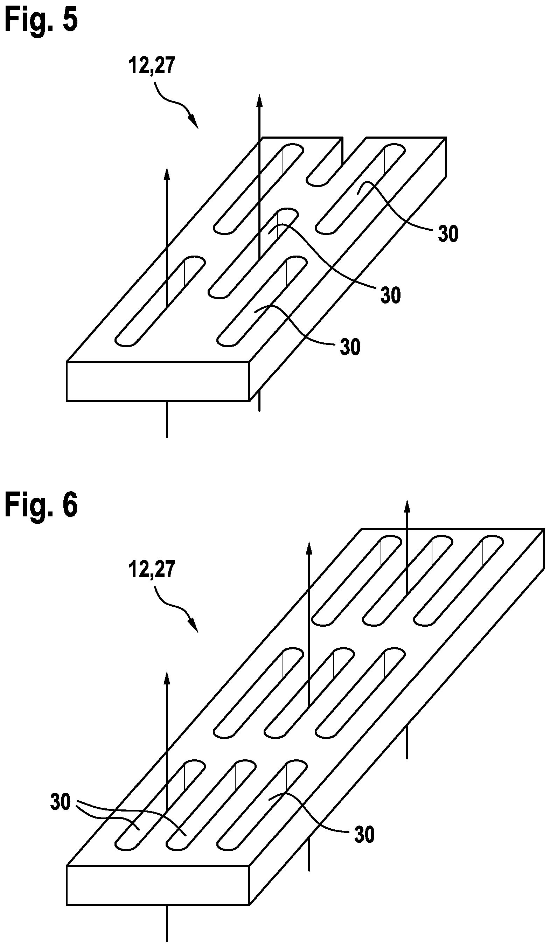

Die Figur 5 zeigt eine schematische Darstellung einer zweiten Variante des Flachleiters 12 beziehungsweise 27. Es wird deutlich, dass dieser eine Vielzahl schlitzförmiger Ausnehmungen 30 aufweist, von welchen lediglich einige beispielhaft gekennzeichnet sind. Die Ausnehmungen 30 sind randgeschlossen in dem Flachleiter 12 beziehungsweise 27 ausgebildet und als Durchtrittsöffnungen ausgestaltet. Letzteres bedeutet, dass sie den Flachleiter 12 beziehungsweise 27 vollständig durchgreifen, also einerseits eine Oberseite und andererseits eine Unterseite durchgreifen.

Die Ausnehmungen 30 sind in dem hier dargestellten Ausführungsbeispiel gestaffelt zueinander angeordnet. Das bedeutet, dass sie in Längsrichtung zumindest teilweise gegeneinander versetzt vorliegen. Beispielsweise ist es wie hier dargestellt vorgesehen, dass jeweils zwei der Ausnehmungen 30 vollständig nebeneinander angeordnet sind und eine dritte der Ausnehmungen 30 in Längsrichtung versetzt zu ihnen angeordnet ist, jedoch teilweise, also lediglich teilweise, zwischen sie eingreift.

Die Figur 6 zeigt eine dritte Variante des Flachleiters 12 beziehungsweise 27. Die Ausnehmungen 30 sind analog zu den vorstehenden Ausführungen ausgestaltet, sodass insoweit auf diese hingewiesen wird. Lediglich die Anordnung der Ausnehmungen 30 ist verschieden. Es ist erkennbar, dass die Ausnehmungen 30 in aufeinanderfolgenden Reihen angeordnet sind, wobei diese Reihen voneinander beabstandet sind.

Innerhalb jeder Reihe liegen mehrere Ausnehmungen 30 vor, welche in Längsrichtung überlappend miteinander angeordnet sind, nämlich vorzugsweise vollständig überlappend. Die Ausnehmungen 30 jeder der Reihen fluchtet vorzugsweise jeweils mit wenigstens einer der Ausnehmungen 30 einer anderen der Reihen. Vorzugsweise fluchtet jede Ausnehmung 30 jeder der Reihen mit einer Ausnehmung 30 jeder der anderen Reihen.

Mit einer derartigen Ausgestaltung des Flachleiters 12 beziehungsweise 27 können Wirbelströme in ihm effektiv unterbunden werden, sodass elektrische Verluste der elektrischen Maschine 1 und insbesondere die in dieser anfallende Wärme deutlich reduziert werden können.

## Patentansprüche

1. Elektrische Maschine (1) mit einem Rotor und einem Stator (2), wobei der Rotor oder der Stator (2) wenigstens eine Spule (4) mit einem Spulenkern (5) und einer den Spulenkern (5) umgreifenden Spulenwicklung (6) aufweist, wobei die Spulenwicklung (6) über wenigstens eine Windung (11) aus einem um mehrere voneinander beabstandete und parallele Biegeachsen (13,14) gebogenen, im Schnitt gesehen S-förmigen und/oder mäanderförmigen Flachleiter (12,27) verfügt, wobei der Flachleiter (12,27) zur Reduzierung von Wirbelströmen mehrere, zumindest bereichsweise gegeneinander isolierte Schichten (29) und/oder eine Vielzahl schlitzförmiger Ausnehmungen (30) aufweist, und die Windung (11) einen auf einer ersten Seite des Spulenkerns (5) angeordneten und mit einer freien Kante (20) in Richtung des Spulenkerns (5) ragenden ersten Kontaktschenkel (17), einen auf einer der ersten Seite gegenüberliegenden zweiten Seite des Spulenkerns (5) angeordneten und mit einer freien Kante (21) in Richtung des Spulenkerns (5) ragenden zweiten Kontaktschenkel (18) sowie einen den ersten Kontaktschenkel (17) und den zweiten Kontaktschenkel (18) verbindenden Verbindungsschenkel (19) aufweist, und die Kontaktschenkel (17, 18) in radialer Richtung gesehen auf gegenüberliegenden Seiten des Verbindungsschenkels (19) vorliegen, und der Verbindungsschenkel (19) über eine erste Biegung (15) mit dem ersten Kontaktschenkel (17) verbunden ist und über eine zweite Biegung (16) mit dem zweiten Kontaktschenkel (18) verbunden ist, wobei die Biegungen (15, 16) jeweils um eine der Biegeachsen (13, 14) gebogen sind, und die erste Biegung (15) Bestandteil des ersten Kontaktschenkels (17) ist und die zweite Biegung (16) Bestandteil des zweiten Kontaktschenkels (18) ist, **dadurch gekennzeichnet, dass** der erste Kontaktschenkel (17) im Bereich einer ersten Biegung (15) und/oder der zweite Kontaktschenkel (18) im Bereich einer zweiten Biegung (16) von dem Verbindungsschenkel (19) jeweils zur Ausbildung eines Fluidkanals (23, 24) beabstandet angeordnet sind/ist.

2. Elektrische Maschine nach Anspruch 1, **dadurch gekennzeichnet, dass** der Flachleiter (12,27) als Blech (12) oder Metallband (27) vorliegt.

3. Elektrische Maschine nach einem der vorhergehenden Ansprüche, **dadurch gekennzeichnet, dass** die Schichten (29) in einem ersten Anschlussbereich und einem von dem ersten Anschlussbereich beabstandeten zweiten Anschlussbereich elektrisch miteinander verbunden sind und zwischen dem ersten Anschlussbereich und dem zweiten Anschlussbereich zumindest bereichsweise, insbesondere durchgehend, elektrisch voneinander isoliert sind.

4. Elektrische Maschine nach einem der vorhergehenden Ansprüche, **dadurch gekennzeichnet, dass** die Schichten (29) fest miteinander verbunden sind, insbesondere durch Löten und/oder Kleben.

5. Elektrische Maschine nach einem der vorhergehenden Ansprüche, **dadurch gekennzeichnet, dass** die Ausnehmungen (30) randgeschlossen in dem Flachleiter (12,27) ausgebildet sind.

6. Elektrische Maschine nach einem der vorhergehenden Ansprüche, **dadurch gekennzeichnet, dass** die Ausnehmungen (30) als eine Oberfläche des Flachleiters (12,27) durchgreifende Vertiefungen oder als den Flachleiter (12,27) beidseitig durchgreifende Durchtrittsausnehmungen ausgebildet sind.

7. Elektrische Maschine nach einem der vorhergehenden Ansprüche, **dadurch gekennzeichnet, dass** wenigstens zwei der Ausnehmungen (30) in Richtung ihrer Längserstreckung überlappend angeordnet sind.

8. Verfahren zum Herstellen einer elektrischen Maschine (1) mit einem Rotor und einem Stator (2), insbesondere einer elektrischen Maschine (1) nach einem oder mehreren der vorhergehenden Ansprüche, wobei der Rotor oder der Stator (2) wenigstens eine Spule (4) mit einem Spulenkern (5) und einer den Spulenkern (5) umgreifenden Spulenwicklung (6) aufweist, wobei die Spulenwicklung (6) über wenigstens eine Windung (11) aus einem im Schnitt gesehen S-förmigen und/oder mäanderförmigen Flachleiter (12,27) verfügt, wobei der Flachleiter (12,27) zur Reduzierung von Wirbelströmen mehrere, zumindest bereichsweise gegeneinander isolierte Schichten (29) und/oder eine Vielzahl schlitzförmiger Ausnehmungen (30) aufweist und zum Ausbilden der Windung (11) um mehrere voneinander beabstandete und parallele Biegeachsen (13,14) gebogen wird, und die Windung (11) einen auf einer ersten Seite des Spulenkerns (5) angeordneten und mit einer freien Kante (20) in Richtung des Spulenkerns (5) ragenden ersten Kontaktschenkel (17), einen auf einer der ersten Seite gegenüberliegenden zweiten Seite des Spulenkerns (5) angeordneten und mit einer freien Kante (21) in Richtung des Spulenkerns (5) ragenden zweiten Kontaktschenkel (18) sowie einen den ersten Kontaktschenkel (17) und den zweiten Kontaktschenkel (18) verbindenden Verbindungsschenkel (19) aufweist, und die Kontaktschenkel (17, 18) in radialer Richtung gesehen auf gegenüberliegenden Seiten des Verbindungsschenkels (19) vorliegen, und der Verbindungsschenkel (19) über eine erste Biegung (15) mit dem ersten Kontaktschenkel (17) verbunden ist und über eine zweite Biegung (16) mit dem zweiten Kontaktschenkel (18) verbunden ist, wobei die Biegungen (15, 16) jeweils um eine der Biegeachsen (13, 14) gebogen sind, und die erste Biegung (15) Bestandteil des ersten Kontaktschenkels (17) ist und die zweite Biegung (16) Bestandteil des zweiten Kontaktschenkels (18) ist, **dadurch gekennzeichnet, dass** der erste Kontaktschenkel (17) im Bereich einer ersten Biegung (15) und/oder der zweite Kontaktschenkel (18) im Bereich einer zweiten Biegung (16) von dem Verbindungsschenkel (19) jeweils zur Ausbildung eines Fluidkanals (23, 24) beabstandet angeordnet sind/ist.

## Claims

1. Electrical machine (1) having a rotor and a stator (2), wherein the rotor or the stator (2) has at least one coil (4) with a coil core (5) and a coil winding (6) encompassing the coil core (5), wherein the coil winding (6) has at least one winding (11) made from a flat conductor (12, 27), which is S-shaped in cross-section and/or meandering in form, and is bent about a plurality of spaced apart and parallel bending axes (13, 14), wherein the flat conductor (12, 27) for reducing eddy currents has a plurality of layers (29) which are insulated from one another at least partly and/or a plurality of slot-like recesses (30) and the winding (11) has a first contact leg (17) arranged on a first side of the coil core (5) and projecting with a free edge (20) in the direction of the coil core (5), a second contact leg (18) arranged on a second side of the coil core (5) opposite the first side and projecting with a free edge (21) in the direction of the coil core (5) and a connecting leg (19) connecting the first contact leg (17) and the second contact leg (18), and the contact legs (17, 18) as viewed in radial direction are provided on opposite sides of the connecting leg (19), and the connecting leg (19) is connected via a first bend (15) to the first contact leg (17) and is connected via a second bend (16) to the second contact leg (18), wherein the bends (15, 16) are bent respectively about one of the bending axes (13, 14) and the first bend (15) is a component of the first contact leg (17) and the second bend (16) is a component of the second contact leg (18), **characterised in that** the first contact leg (17) is arranged spaced apart in the region of a first bend (15) and/or the second contact leg (18) is arranged spaced apart in the region of a second bend (16) of the connecting leg (19) respectively for forming a fluid channel (23, 24).

2. Electrical machine according to claim 1, **characterised in that** the flat conductor (12, 27) is in the form of a metal sheet (12) or metal strip (27).

3. Electrical machine according to any of the preceding claims, **characterised in that** the layers (29) are joined together electrically in a first connection area and a second connection area spaced apart from the first connection area and are insulated from one another electrically between the first connection area and the second connection area at least partly, in particularly continuously.

4. Electrical machine according to any of the preceding claims, **characterised in that** the layers (29) are joined to one another securely, in particular by soldering and/or adhesion.

5. Electrical machine according to any of the preceding claims, **characterised in that** the recesses (30) are designed to be closed around the edge in the flat conductor (12, 27).

6. Electrical machine according to any of the preceding claims, **characterised in that** the recesses (30) are designed depressions passing through a surface of the flat conductor (12, 27) or as through openings passing through the flat conductor (12, 27) on both sides.

7. Electrical machine according to any of the preceding claims, **characterised in that** at least two of the recesses (30) are arranged to be overlapping in the direction of their longitudinal extension.

8. Method for producing an electrical machine (1) having a rotor and a stator (2), in particular an electrical machine (1) according to one or more of the preceding claims, wherein the rotor or the stator (2) has at least one coil (4) with a coil core (5) and a coil winding (6) encompassing the coil core (5), wherein the coil winding (6) has at least one winding (11) made from a flat conductor (12, 27), which is S-shaped in cross-section and/or meandering in form, wherein the flat conductor (12, 27) for reducing eddy currents has a plurality of layers (29) insulated from one another at least partly and/or a plurality of slot-like recesses (30) and is bent for forming the winding (11) around a plurality of spaced apart and parallel bending axes (13, 14), and the winding (11) has a first contact leg (17) arranged on a first side of the soil core (5) and projecting with a free edge (20) in the direction of the coil core (5), a second contact leg (18) arranged on a second side of the coil core (5) opposite the first side and projecting with a free edge (21) in the direction of the coil core (5) and a connecting leg (19) connecting the first contact leg (17) and the second contact leg (18), and the contact legs (17, 18) as viewed in radial direction are provided on opposite sides of the connecting leg (19), and the connecting leg (19) is connected via a first bend (15) to the first contact leg (17) and is connected via a second bend (16) to the second contact leg (18), wherein the bends (15, 16) are bent respectively about one of the bending axes (13, 14) and the first bend (15) is a component of the first contact leg (17) and the second bend (16) is component of the second contact leg (18), **characterised in that** the first contact leg (17) is arranged spaced apart in the region of a first bend (15) and/or the second contact leg (18) is arranged spaced apart in the region of a second bend (16) of the connecting leg (19) respectively for forming a fluid channel (23, 24).

## Revendications

1. Machine électrique (1) avec un rotor et un stator (2), le rotor ou le stator (2) présentant au moins une bobine (4) avec un noyau de bobine (5) et un enroulement de bobine (6) qui entoure le noyau de bobine (5), dans lequel l'enroulement de bobine (6) présente au moins une spire (11) constituée d'un conducteur plat (12, 27) qui est plié autour de plusieurs axes de pliage (13, 14) espacés et parallèles entre eux et en forme de S et/ou de méandre lorsqu'il est vu en coupe, le conducteur plat (12, 27) présentant, pour réduire les courants de Foucault, plusieurs couches (29) et/ou une pluralité d'évidements en forme de fente (30) qui sont au moins partiellement isolés les uns des autres, et la spire (11) présentant une première branche de contact (17) qui est disposée sur un premier côté du noyau de bobine (5) et qui fait saillie avec un bord libre (20) en direction du noyau de bobine (5), une seconde branche de contact (18) disposée sur un second côté du noyau de bobine (5) opposé au premier côté et faisant saillie avec un bord libre (21) en direction du noyau de bobine (5), et une branche de connexion (19) reliant la première branche de contact (17) et la seconde branche de contact (18), et les branches de contact (17, 18) étant présentes sur des côtés opposés de la branche de connexion (19), vu dans le sens radial, et la branche de connexion (19) étant reliée à la première branche de contact (17) par un premier coude (15) et reliée à la seconde branche de contact (18) par un second coude (16), les coudes (15, 16) étant chacun pliés autour d'un des axes de pliage (13, 14), et le premier coude (15) faisant partie de la première branche de contact (17) et le second coude (16) faisant partie de la seconde branche de contact (18), **caractérisée en ce que** la première branche de contact (17) est disposée dans la zone d'un premier coude (15) et/ou la seconde branche de contact (18) est disposée dans la zone d'un second coude (16) à distance de la branche de connexion (19) pour former respectivement un canal de fluide (23, 24).

2. Machine électrique selon la revendication 1, **caractérisée en ce que** le conducteur plat (12, 27) se présente sous la forme d'une tôle (12) ou bande métallique (27).

3. Machine électrique selon l'une quelconque des revendications précédentes, **caractérisée en ce que** les couches (29) sont reliées électriquement entre elles dans une première zone de connexion et une seconde zone de connexion espacée de la première zone de connexion et sont isolées électriquement les unes des autres au moins par zones, en particulier de manière continue, entre la première zone de connexion et la seconde zone de connexion.

4. Machine électrique selon l'une quelconque des revendications précédentes, **caractérisée en ce que** les couches (29) sont fermement reliées entre elles, notamment par soudage et/ou collage.

5. Machine électrique selon l'une quelconque des revendications précédentes, **caractérisée en ce que** les évidements (30) sont formés dans le conducteur plat (12, 27) de manière à être fermés sur les bords.

6. Machine électrique selon l'une quelconque des revendications précédentes, **caractérisée en ce que** les évidements (30) sont formés comme des creux pénétrant une surface du conducteur plat (12, 27) ou comme des évidements traversants pénétrant le conducteur plat (12, 27) des deux côtés.

7. Machine électrique selon l'une quelconque des revendications précédentes, **caractérisée en ce qu'**au moins deux des évidements (30) sont disposés en se chevauchant dans le sens de leur extension longitudinale.

8. Procédé de fabrication d'une machine électrique (1) avec un rotor et un stator (2), en particulier d'une machine électrique (1) selon l'une quelconque ou plusieurs des revendications précédentes, le rotor ou le stator (2) présentant au moins une bobine (4) avec un noyau de bobine (5) et un enroulement de bobine (6) qui entoure le noyau de bobine (5), dans lequel l'enroulement de bobine (6) présente au moins une spire (11) constituée d'un conducteur plat (12, 27) qui est en forme de S et/ou de méandre lorsqu'il est vu en coupe, le conducteur plat (12, 27) présentant, pour réduire les courants de Foucault, plusieurs couches (29) et/ou une pluralité d'évidements en forme de fente (30) qui sont au moins partiellement isolés les uns des autres, et étant plié autour de plusieurs axes de pliage (13, 14) espacés et parallèles entre eux pour former la bobine (11), et la spire (11) présentant une première branche de contact (17) qui est disposée sur un premier côté du noyau de bobine (5) et qui fait saillie avec un bord libre (20) en direction du noyau de bobine (5), une seconde branche de contact (18) disposée sur un second côté du noyau de bobine (5) opposé au premier côté et faisant saillie avec un bord libre (21) en direction du noyau de bobine (5), et une branche de connexion (19) reliant la première branche de contact (17) et la seconde branche de contact (18), et les branches de contact (17, 18) étant présentes sur des côtés opposés de la branche de connexion (19), vu dans le sens radial, et la branche de connexion (19) étant reliée à la première branche de contact (17) par un premier coude (15) et reliée à la seconde branche de contact (18) par un second coude (16), les coudes (15, 16) étant chacun pliés autour d'un des axes de pliage (13, 14), et le premier coude (15) faisant partie de la première branche de contact (17) et le second coude (16) faisant partie de la seconde branche de contact (18), **caractérisé en ce que** la première branche de contact (17) est disposée dans la zone d'un premier coude (15) et/ou la seconde branche de contact (18) est disposée dans la zone d'un second coude (16) à distance de la branche de connexion (19) pour former respectivement un canal de fluide (23, 24).
